Europäisches Patentamt

(19) European Patent Office

Office européen des brevets

(11) Publication number: **0 105 553**
**B1**

(12) **EUROPEAN PATENT SPECIFICATION**

(45) Date of publication of patent specification: **24.06.87**

(21) Application number: **83201360.1**

(22) Date of filing: **23.09.83**

(51) Int. Cl.⁴: **H 04 L 9/02**

(54) **Device for enciphering digital signals comprising one or more DES circuits.**

(30) Priority: **27.09.82 NL 8203737**

(43) Date of publication of application:
**18.04.84 Bulletin 84/16**

(45) Publication of the grant of the patent:
**24.06.87 Bulletin 87/26**

(84) Designated Contracting States:
**AT BE CH DE FR GB IT LI LU SE**

(56) References cited:
**US-A-3 798 360**

**FREQUENZ, vol. 35, no. 2, February 1981, pages 41-46, Berlin, DE. K.H. MUELLER: "Ausgewählte Sicherheits- und Übertragungsaspekte der modernen Kryptographie"**

**DATA COMMUNICATIONS, vol. 11, no. 4, April 1982, pages 48-53, New York, USA "An encryption scheme to crimp crooked bank wire transfers"**

(73) Proprietor: **Staat der Nederlanden (Staatsbedrijf der Posterijen, Telegrafie en Telefonie)**
**P.O. Box 430**
**NL-2260 AK Leidschendam (NL)**

(72) Inventor: **Oberman, Maarten Roelof**
**Bergluststraat 6a**
**NL-3054 BM Rotterdam (NL)**

Courier Press, Leamington Spa, England.

# Description

## A. Background of the invention
### 1. Field of the invention

The invention relates to a device for enciphering or deciphering digital signals comprising at least one data encryption standard unit (DES). The working of such DES is described in greater detail in reference D1. Encipher units are mainly utilized in data connections allowing the relatively simple interception of data traffic, as it is the case for example with microwave radio relay links, and in connections for the transmission of information the content of which may absolutely not become known. Consequently, said data encryption standard units have been amply utilized for the purpose described, in which case the data signal to be transmitted is enciphered at the transmitting end with the help of a DES by means of one of $2^{56}$ different keys, whereas it is deciphered at a receiving end by means of the same key.

### 2. State of the art

A device for enciphering and/or deciphering digital signals, comprising a data encryption standard unit (DES) and adding means for logically adding a number of DES-output bits to other bits, is known from an article "Ausgewählte Sicherheits- und Übertragungsaspekte der modernen Kryptographie" by Kurt H. Mueller, published in Frequenz, Vol. 35, Nr. 2, February 1981. As appears from page 42, left-hand column lines 6—9, read in conjunction with page 42, left-hand column, lines 16—23 of the afore-mentioned article, the prior art disclosed therein relates to systems operating in the so called additive stream mode. To illustrate such systems said article describes alternative embodiments of DES-arrangements having cipher or single bit feedback included therein. The degree of complexity of an enciphering code obtained with systems of the afore-mentioned type is restricted in a certain way. Therefore an enciphering code of such a prior art system is relatively easy to break.

In reference D2 it has already been pointed out that the 56-bit key is too small, in the sense that the key used can be found out relatively quickly by testing out each of the $2^{56}$ keys on a data signal intercepted, and that multiple enciphering can offer a solution in this case. In reference D3 it is pointed out, however, that double enciphering does not lead to the certainty meant. This is caused inter alia by the fact that there are so-called weak keys, as described in reference D4, but it may also occur that errors are committed when setting the encipher/decipher modes of the two DES applied. In both cases it may occur that double enciphering will lead to the transmission of the original or clear text.

## B. Summary of the invention

It is an object of the present invention to provide a simple structure for a device capable of multiple enciphering a data signal in a reliable and economical way, while making it feasible to also apply so-called weak keys without the unacceptable risk that an infringer might too quickly break the coding, for example by means of a try-out process. The invention relies on the idea that the interaction between all the key bits and all the data bits is considerably enlarged by adding modulo $2^N$ certain DES-output bits to certain other DES-output bits, wherein N is an integer up to a maximum of half the number of bits produced by the combined action of DES and adding means.

A device for enciphering and/or deciphering digital signals of the invention is characterized thereby that said DES has its input connected to a set of input terminals of said device for concurrently receiving data bits of a signal to be enciphered or deciphered; said adding means have their inputs connected to the output of said DES in such a manner that said number of DES-output bits is logically added to DES-output bits other than the DES-output bits included in said number; and said adding means are adapted to perform a modulo-$2^N$ operation on the bits supplied to their inputs, wherein N is any positive integer of the sequence 1, 2, 3, etc., and said number is smaller than or equal to half the number of bits of a signal which has been enciphered or deciphered by the combined action of said DES and said adding means.

An alternative embodiment of the invention is characterized thereby that the outputs of said adding means and those DES-outputs at which an input of said adding means is branched-off, are connected to the input of a second DES.

The invention yields the advantage that despite the simple structure, it is practically impossible to decipher an enciphered signal within reasonable time.

In addition, the chance of transmitting clear text during an enciphering process is substantially reduced, even in case a DES should have been incorrectly set during said enciphering process.

## C. Brief description of the drawing

The invention will now be further elucidated with the aid of the drawing in which is represented by

Figure 1 a connecting diagram of a data encryption standard (DES)

Figure 2 a known series circuit of two DES units

Figure 3 a block diagram of a series circuit according to the invention of two DES-units

Figure 4 a preferred embodiment of the circuit according to Figure 3.

Figure 5 a variant of the circuit according to Figure 3.

Figure 6 a truth table of the circuits 19 and 20 of Figure 5.

Figure 7a an elaborate series circuit of two DES-units with interaction per byte with

Figure 7b a time diagram

Figure 8 a block diagram of a circuit with four DES-units.

Figure 9 a block diagram of a circuit with four DES-units according to the invention.

Figure 10a an elaborate diagram of a circuit according to the invention with four DES-units with interaction per block of eight bytes with.

Figure 10b a circuit diagram.

Figure 11 a block diagram of a circuit according to the invention provided with a microprocessor.

D. References

1. Fips. Pub. 46 of January 15, 1977. Publisher: U.S. Dept. of Commerce/National Bureau of Standards.

2. Diffie, W. et al: Exhaustive cryptanalysis of the NBS data encryption standard. Journal: Computer; June 1977; pp. 74—84.

3. Merkle, R. C. et al: On the security of Multiple Encryption. Journal; Communications of the ACM July 1981; Volume 24; No. 7 pp. 465—467.

4. D. W. Davies: Data security in networks. Sixth data communications symposium at Asilomar Cal. U.S.A. November 26, 1979. Publisher: IEEE New York NY U.S.A.

E. Description of the embodiments

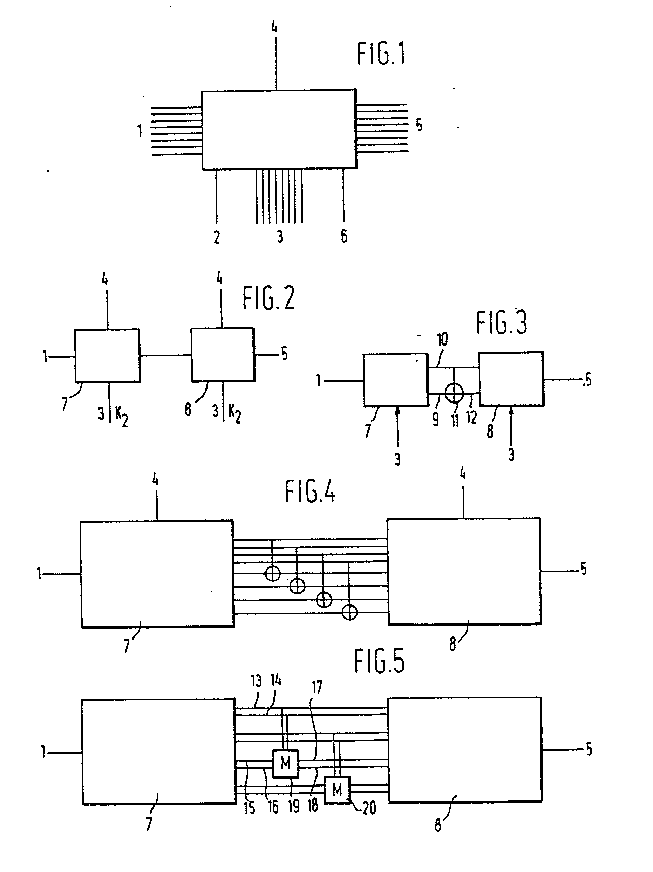

Figure 1 shows a connecting diagram of a DES in which a data signal of eight bytes each having eight bits can be supplied to an octuple input 1. Every time a reading-in command is supplied to an.input 2 one byte of the signal to be enciphered is read in at the input 1, and one byte of a key is read in at an octuple input 3. The enciphering or deciphering process takes place after the reading in of the eight bytes at the inputs 1 and 3. A control signal at an input 4 determines whether the DES enciphers or deciphers. Every time a command is given at an input 6, one byte of the eight bytes enciphered is supplied via an octuple output 5. The working of a DES is generally known and is further described in reference D1.

An improvement of the circuit according to Figure 1 is formed by the circuit according to Figure 2, which is already known and in which two DES units 7 and 8 are connected in series (see reference D3). The improvement according to the present invention is indicated in the block diagram according to Figure 3, in which at the octuple input 1 of the DES unit 7 a block of eight bytes is read in in the way as described above. The bytes enciphered are supplied one by one to four-wire outputs 9 and 10, after which the signals of the output 9 are added modulo 2 to the signals of the output 10 by means of 1, 2, 3 or 4 EXOR-gates 11 before being supplied to the DES unit 8 via an input 12. The same key as supplied to the input 3 of the DES unit 7 or another key can be supplied to the input 3 of the DES unit 8.

Figure 4 shows an example of the connections between the two DES units 7 and 8. It is self-evident that every other suitable wiring sequence will suffice. A corresponding circuit is utilized for the decipherment at the receiving end.

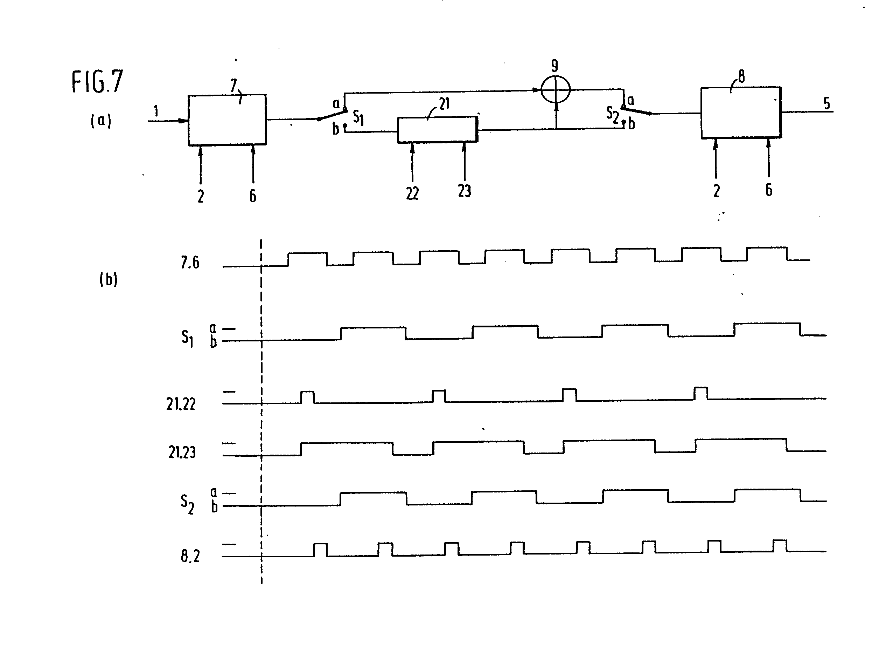

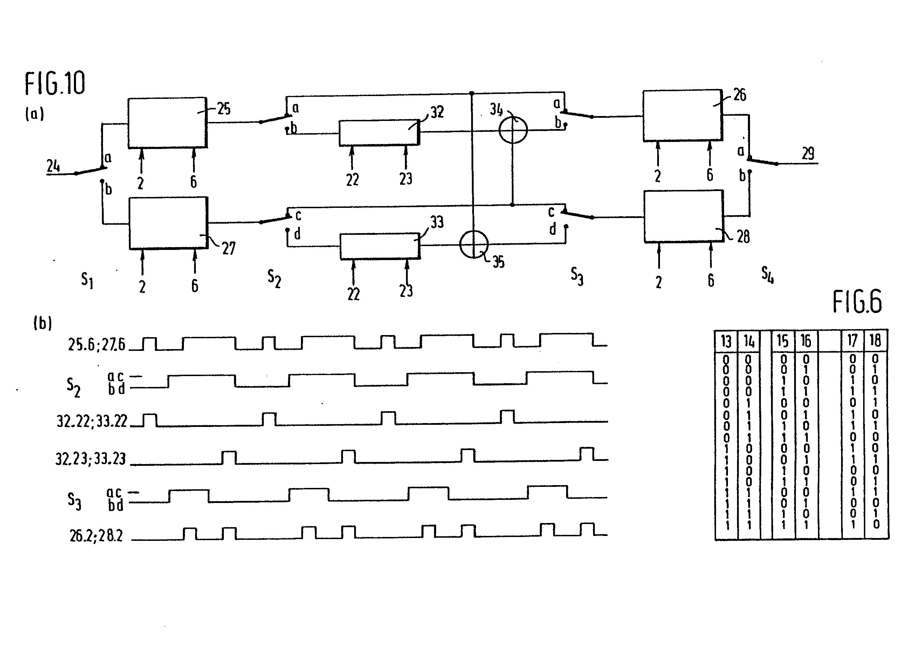

Figure 5 shows an embodiment for a modulo-4 addition. The signals of the conductors 13 and 14 are added modulo 4 to those of the conductors 15 and 16 via the modulo-4 adders 19 and 20, respectively. The truth table for these adders is shown by Figure 6. A modulo-8 addition can be realized in the same ways as described above.

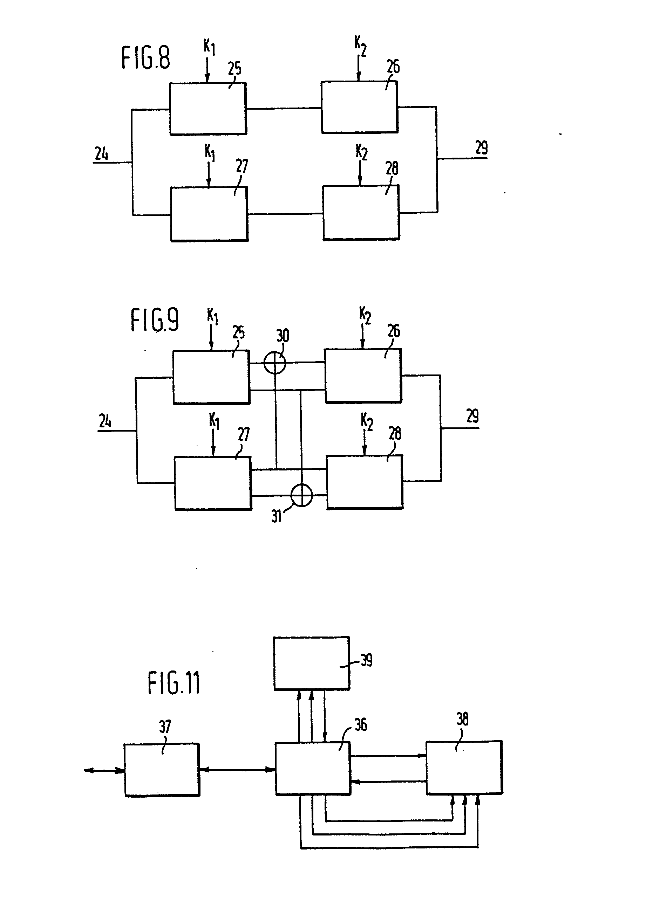

Each of the embodiments described relates to a modulo-$2^N$ addition within one byte. A more complex variant is shown by Figure 7, in which Figure 7a represents a circuit for the modulo-2 addition of the bits of two bytes. Because of the fact that the bytes are read from the DES 7 on a time division basis, an intermediate store 21 is used.

Figure 7b shows the appurtenant circuit diagram for the various functions. A first byte is read out via the octuple output of the DES 7 and supplied via an octuple switch $S_1$ in position b to the intermediate store 21 and read in by the energization of an input 22. At the same time a reading-out input 23 is energized, so that the byte will be supplied to the DES 8 via an octuple switch $S_2$ in position b. After this the switches $S_1$ and $S_2$ are switched to positions a, a second byte is added to the DES 8 via the octuple EXOR-gate 9, and the first byte registered in the intermediate store 21 is added modulo 2 to said DES 8. In the same way the third byte is added modulo 2 to the fourth byte, the fifth byte to the sixth byte and so forth. It is self-evident that here too modulo 4 and 8 additions and every combination of bytes are feasible.

The effect of each of the circuits described above is that the number of key combinations will be increased, and owing to the interaction caused by the EXOR-gates, they each offer a considerably better protection against weak keys and control errors than could be obtained by using the devices known so far.

A more complex way of combining DES units is shown by Figure 8, in which the series chains of DES units 25 and 26 on the one hand and those of DES units 27 and 28 on the other hand are connected in parallel. Via an input 24 one or more bytes are alternately supplied to each of the two chains. After the enciphering process the bytes enciphered are alternately led from each of the chains to an output 29 in the same rhythm. Various keys k can be supplied to the DES units 25, 26, 27 and 28. An improvement will be attained by the embodiment according to Figure 9, where interaction takes place between the cipher texts of 25 and 27 by making use of interaction, as described before, by means of EXOR-gates 30 and 31. Here too the byte-by-byte encipherment can take place in the same way as described with the help of Figure 7: this is represented by the more detailed diagram of Figure 10a with the appurtenant time diagram of Figure 10b. Here stores 32 and 33 serve again for registering a byte, and the octuple EXOR-gates 34 and 35 serve for the modulo-2 addition.

It is obvious that the embodiments described above can be combined in an almost unlimited way without getting outside the scope of the present invention.

All the solutions mentioned have the advantage that by concatenating standard DES units and EXOR functions a considerably better protection against the testing out of the key possibilities of the signal to be transmitted will be obtained.

Figure 11 shows a circuit connected with a microprocessor 36. A signal to be enciphered, which is supplied to an I/O unit 37, is led byte by byte into a DES 38 by the microprocessor 36. At the same time the microprocessor 36 reads a first key from a store 39. After the first enciphering process the signal enciphered is added modulo $2^N$ by the microprocessor 36 in the way as described above. The signal thus formed is supplied again to the DES 38 and enciphered once more by means of the same key or by means of another key, which is also registered in the store 39. The store 39 comprises a read-only-memory part (ROM), which the procedure and the various processes are stored, as well as a read/write part (e.g. RAM) for storing the results of the various processes.

**Claims**

1. A device for enciphering and/or deciphering digital signals, comprising a data encryption standard unit (DES) and adding means for logically adding a number of DES-output bits to other bits, characterized in that said DES (7) has its input (1) connected to a set of input terminals of said device for concurrently receiving data bits of a signal to be enciphered or deciphered; said adding means (11, 19, 20) have their inputs connected to the output of said DES in such a manner that said number of DES-output bits is logically added to DES-output bits other than the DES-output bits included in said number; and said adding means are adapted to perform a modulo $2^N$ operation on the bits supplied to their inputs, wherein N is any positive integer of the sequence 1, 2, 3 etc., and said number is smaller than or equal to half the number of bits of a signal which has been enciphered or deciphered by the combined action of said DES and said adding means.

2. A device as defined in Claim 1, characterized in that the outputs of said adding means and those DES-outputs at which an input of said adding means is branched-off, are connected to the input of a second DES (8).

3. Device in accordance with Claim 1, characterized by four DES (25, 26, 27, 28), which are connected in parallel in two series branches of each two DES (25, 26; 27, 28) a first part of the number of bits of a signal enciphered by a first DES in a first series branch of said two series branches being added modulo $2^N$ to a first part of the number of bits of a signal enciphered by a first DES in the second series branch, and another part of the bits of a signal enciphered by the first DES of the second series branch being added modulo $2^N$ to another part of the bits of a signal enciphered by the first DES of the first series branch.

**Patentansprüche**

1. Vorrichtung zum Codieren und Decodieren von digitalen Signalen mit einer standardisierten Datenverschlüsselungseinheit (7) und Addiermittel zur logischen Addition einer Anzahl Ausgangsbits der Datenverschlüsselungseinheit zu andern Bits, dadurch gekennzeichnet, dass der Eingang (1) der Datenverschlüsselungseinheit (7) mit einem Satz Eingangsanschlüsse der Vorrichtung verbunden ist, um empfangene Datenbits eines Signals das zu codieren oder zu decodieren ist, in paralleler Form zu empfangen; dass die Eingänge der Addiermittel (11, 19, 20) mit dem Ausgang der Datenverschlüsselungseinheit (7) in der Weise verbunden sind, dass die Anzahl der Ausgangsbits der Datenverschlüsselungseinheit logisch zu Ausgangsbits der Datenverschlüsselungseinheit, die andere Bits sind als die der genannten Anzahl Ausgangsbits, addiert werden, und dass diese Addiermittel (11, 19, 20) in der Lage sind, eine Modulo $2^N$-Operation an den dem Eingang zugeführten Bits durchzuführen, wobei N eine positive ganze Zahl der Reihe 1, 2, 3 usw. ist und die genannte Anzahl Bits kleiner oder gleich der Hälfte der Anzahl Bits eines Signals ist, das durch die Zusammenwirkung der Datenverschlüsselungseinheit und der Addiermittel codiert oder decodiert wurde.

2. Vorrichtung nach Patentanspruch 1, dadurch gekennzeichnet, dass die Ausgänge der Addiermittel und diejenigen Ausgänge der Datenverschlüsselungseinheit von den eine Zweigleitung zu einem Eingang der genannten ADdiermittel führt mit dem Eingang einer zweiten Datenverschlüsselungseinheit (8) verbunden sind.

3. Vorrichtung nach Patentanspruch 1, gekennzeichnet durch vier Datenverschlüsselungseinheiten (25, 26, 27, 28) die parallel in zwei reihengeschalteten Zweigen verbunden sind, von denen jeweils eine erste Partie der Anzahl Bits eines durch eine erste Datenverschlüsselungseinheit (25, 26, 27, 28) in einem ersten Zweig der beiden Zweige zu einer ersten Partie der Anzahl Bits eines durch eine erste Datenverschlüsselungseinheit im zweiten Zweig Modulo-$2^N$ addiert wird und die andere Partie der Bits eines Signals das durch die erste Datenverschlüsselungseinheit des zweiten Zweiges zur andern Partie der Bits eines Signals das durch die erste Datenverschlüsselungseinheit des ersten Zweiges Modulo-$2^N$ addiert wird.

**Revendications**

1. Dispositif pour chiffrer et/ou déchiffrer des signaux numériques, comprenant un circuit normalisé de chiffrement de données (DES) et des moyens d'addition pour l'addition logique d'un nombre de bits de sortie de DES à d'autres bits, caractérisé en ce que le DES (7) est connecté par son entrée (1) à une série de bornes d'entrée du dispositif, en vue de la réception simultanée de bits de données d'un signal à chiffrer ou à déchiffrer; les moyens d'addition (11, 19, 20) sont connectés par leurs entrées à la sortie du DES, de manière que ledit nombre de bits de sortie de DES soit additioné logiquement à des bits de sortie de DES autres que les bits de sortie de DES inclus

4

dans ce nombre, et les moyens d'addition sont adaptés pour effectuer une opération modulo $2^N$ sur les bits appliqués à leur entrée, N étant un quelconque entier positif de la suite 1, 2, 3, etc., et ledit nombre est inférieur ou égal à la moitié du nombre de bits d'un signal qui a été chiffré ou déchiffré par l'action combinée du DES et les moyens d'addition.

2. Dispositif selon la revendication 1, caractérisé en ce que les sorties des moyens d'addition et telles sorties de DES desquelles une ligne de branchement mène à une entrée des moyens d'addition, sont connectés à l'entree d'un deuxième DES (8).

3. Dispositif selon la revendication 1, caractérisé par quatre DES (25, 26, 27, 28) dans un montage série-parallèle formé de deux branches parallèles contenant chacune deux DES en série (25, 26; 27, 28), une première partie due nombre de bits d'un signal chiffré par un premier DES dans une première des deux branches étant additionné modulo $2^N$ à une première partie du nombre de bits d'un signal chiffré par un premier DES de la deuxième branche, et un autre partie des bits d'un signal chiffré par le premier DES de la deuxième branche étant additionée modulo $2^N$ à une autre partie de bits d'un signal chiffré par le premier DES de la première branche.

FIG.1

FIG.2

FIG.3

FIG.4

FIG.5

FIG.7

(a)

(b)

FIG.10

(a)

25

a
b

32

34

a
b

26

24

a
b

2   6

2   6

29

S₁
2   6

27

S₂

c
d

33

35

c
d

S₃

28

S₄
2   6

22  23

22  23

FIG.6

(b)

25.6;27.6

S₂   a c
     b d

32.22;33.22

32.23;33.23

S₃   a c
     b d

26.2;28.2

0 105 553

| 13 | 14 | 15 | 16 | | 17 | 18 |
|---|---|---|---|---|---|---|
| 0 | 0 | 0 | 0 | | 0 | 0 |
| 0 | 0 | 0 | 1 | | 0 | 1 |
| 0 | 0 | 1 | 0 | | 1 | 0 |
| 0 | 0 | 1 | 1 | | 1 | 1 |
| 0 | 1 | 0 | 0 | | 0 | 0 |
| 0 | 1 | 0 | 1 | | 1 | 1 |
| 0 | 1 | 1 | 0 | | 1 | 0 |
| 0 | 1 | 1 | 1 | | 0 | 1 |
| 0 | 0 | 0 | 0 | | 1 | 1 |
| 0 | 0 | 0 | 1 | | 0 | 0 |
| 0 | 0 | 1 | 0 | | 0 | 1 |
| 0 | 0 | 1 | 1 | | 1 | 0 |
| 1 | 1 | 0 | 0 | | 1 | 1 |
| 1 | 1 | 0 | 1 | | 0 | 0 |
| 1 | 1 | 1 | 0 | | 0 | 1 |
| 1 | 1 | 1 | 1 | | 1 | 0 |

FIG.8

FIG.9

FIG.11